# EUROPEAN PATENT APPLICATION

(11) **EP 4 190 928 A1**
(43) Date of publication of application: **07.06.2023**
(21) Application number: 21851947.8
(22) Date of filing: 28.07.2021
(51) Int. Cl.: C22C 5/02, C22C 5/04, C22C 5/06, C22C 12/00, C22C 18/00, C22C 18/04, C22C 21/00, C22C 23/00, C22C 23/02, C22C 23/04, C22C 24/00, C22C 28/00, H01M 4/134, H01M 4/38, H01M 4/40, H01M 4/42, H01M 4/46, H01M 10/052, H01M 10/0562, H01M 10/0585

(54) **NEGATIVE ELECTRODE COMPOSITE BODY AND SECONDARY BATTERY**

(30) Priority: 03.08.2020 JP 2020131708
(71) Applicant: University Public Corporation Osaka, Osaka-shi, Osaka 545-0051 (JP)
(72) Inventor: SAKUDA, Atsushi, Sakai-shi, Osaka 599-8531 (JP); INAOKA, Takeaki, Sakai-shi, Osaka 599-8531 (JP); HAYASHI, Akitoshi, Sakai-shi, Osaka 599-8531 (JP); TATSUMISAGO, Masahiro, Sakai-shi, Osaka 599-8531 (JP)
(74) Representative: Modiano, Gabriella Diana
(86) International application number: PCT/JP2021/027951
(87) International publication number: WO 2022/030333

(57) **Abstract**

The present invention addresses the problem of providing a countermeasure against deposition of an alkali metal in cases where the alkali metal is used as a negative electrode. The above-described problem is solved by a negative electrode composite body that contains: a negative electrode active material which contains, as main components, Li and an element M that is solid soluble in Li; and a substance X which has a higher redox potential than the negative electrode active material, or a substance X which does not have electrode activity.

## Description

### [Technical Field]

The present invention relates to a negative electrode composite and a secondary battery. More specifically, the present invention relates to a negative electrode composite including: a negative electrode active material containing Li and an element M that is solid soluble in Li as main components; and a substance X having a higher redox potential than the negative electrode active material or having no electrode activity, and a secondary battery including the negative electrode composite.

### [Background Art]

In recent years, there has been an increasing demand for lithium-ion secondary batteries for storing electric power in vehicles, such as electric vehicles and hybrid vehicles, and power generation devices, such as solar batteries and wind power generators.

Further, from the viewpoint of ensuring safety, all-solid-state batteries, which use a solid electrolyte layer instead of a liquid electrolyte layer, have been actively studied.

These lithium-ion secondary batteries are widely used as power sources for mobile phones and small devices, and are also candidates for power sources for electric vehicles. However, they have lower energy density when compared to gasoline-powered vehicles, and even higher energy density is required to achieve an equivalent cruising range.

However, improvement of the carbon negative electrode used for lithium-ion secondary batteries in practical use has reached its limit, and there is a need for negative electrode materials having higher capacities. However, novel negative electrode materials using a negative electrode other than carbon are prone to dendrite precipitation of lithium at the negative electrode during charging, and the precipitated metal can penetrate the separator and induce an internal short circuit between the positive electrode and the negative electrode, resulting in a risk of ignition.

Various attempts have been made to obtain a novel negative electrode material that solves this problem, and there are some reported cases. For example, a negative electrode material in which a scaly fine powder of Si is mixed with carbon is disclosed (Patent Literature 1). In another example, a negative electrode for a non-aqueous secondary battery having an intermetallic compound capable of absorbing and desorbing Li as an active material layer on a Cu or Cu alloy current collector is disclosed (Patent Literature 2). In another example, a negative electrode in which a thin film layer containing a metal that is not alloyed with Li and a thin film layer containing a metal element or a compound of a metal element that can be alloyed with Li are alternately stacked in a total of three or more layers is disclosed (Patent Literature 3).

These examples are attempts to obtain novel negative electrode materials without using Li-based metals as the negative electrode. In the meantime, Li-based metal negative electrodes have a large theoretical capacity (3861 mAh g⁻¹) and the lowest redox potential (-3.045 V vs. SHE), and thus are the most attractive materials for achieving high energy density. By using Li-based metal negative electrodes, batteries having high energy density can be constructed. As an attempt to use a Li-based metal negative electrode as the negative electrode, for example, a negative electrode using a lithium metal compound on the surface of pyrolytic graphite oxide is disclosed (Patent Literature 4).

### [Citation List]

### [Patent Literature]

Patent Literature 1: Japanese Unexamined Patent Application Publication No. 2015-032447
Patent Literature 2: Japanese Unexamined Patent Application Publication No. 2004-319457
Patent Literature 3: Japanese Unexamined Patent Application Publication No. 2004-103476
Patent Literature 4: Japanese Unexamined Patent Application Publication No. 2002-008653

### [Summary of Invention]

### [Technical Problem]

However, even when a Li-based metal is used as the negative electrode as described in, for example, Patent Literature 4, dendritic precipitation of an alkali metal occurs, which induces an internal short circuit. Also in all-solid-state batteries, dendritic precipitation of an alkali metal induces an internal short circuit, which causes significant deterioration of battery performance. For this reason, the practical application of negative electrodes using Li-based metals has not progressed. An object of the present invention is to provide, as a novel negative electrode material, a superior negative electrode material capable of suppressing dendritic precipitation of an alkali metal while using a Li-based metal.

### [Solution to Problem]

As a result of intensive studies, the inventors of the present invention have found that the above problem can be solved by a negative electrode composite including: a negative electrode active material containing Li and an element M that is solid soluble in Li as main components; and a substance X having a higher redox potential than the negative electrode active material or having no electrode activity, and arrived at the present invention.

Thus, according to the present invention, there is provided a negative electrode composite including: a negative electrode active material containing Li and an element M that is solid soluble in Li as main components; and a substance X having a higher redox potential than the negative electrode active material or having no electrode activity.

In addition, according to the present invention, there is provided a negative electrode composite comprising a negative electrode layer including a negative electrode active material containing Li and Mg as main components.

In addition, according to the present invention, there is provided a secondary battery comprising the negative electrode composite, an electrolyte layer in contact with a thin layer, and a positive electrode composite including a positive electrode active material.

### [Advantageous Effects of Invention]

According to the present invention, a novel negative electrode composite having excellent dissolution and precipitation characteristics can be provided.

### [Brief Description of Drawings]

FIG. 1A is a schematic diagram of a symmetric cell 1.
FIG. 1B is a schematic diagram of a symmetric cell 2.
FIG. 1C is a schematic diagram of a symmetric cell 3.
FIG. 2 shows the results of constant current cycle tests of the symmetric cell 1 and the symmetric cell 3.
FIG. 3 shows the results of constant current cycle tests of the symmetric cell 2 and the symmetric cell 3.
FIG. 4 is an SEM image of a cutout section of the symmetric cell 1 after a short circuit.
FIG. 5 is an SEM image of a cutout section of the symmetric cell 2 after a short circuit.
FIG. 6 is an SEM image of a cutout section of the symmetric cell 3 after a short circuit.
FIG. 7 is a schematic diagram of a symmetric cell 4.
FIG. 8 shows the results of a constant current cycle test of the symmetric cell 4.
FIG. 9 is an SEM image of a cutout section of the symmetric cell 4 after a short circuit.
FIG. 10 is the results of XRD measurement of the interface of the symmetric cell 1 after a short circuit.
FIG. 11 is the results of XRD measurement of the interface of the symmetric cell 2 after a short circuit.
FIG. 12 is the results of XRD measurement of the interface of the symmetric cell 4 after a short circuit.
FIG. 13A is an SEM image of the interface of the symmetric cell 1 after a short circuit.
FIG. 13B is an SEM-EDS image for Mg at the interface of the symmetric cell 1 after a short circuit.
FIG. 14A is an SEM image of the interface of the symmetric cell 2 after a short circuit.
FIG. 14B is an SEM-EDS image for Sn at the interface of the symmetric cell 2 after a short circuit.
FIG. 15A is an SEM image of the interface of the symmetric cell 4 after a short circuit.
FIG. 15B is an SEM-EDS image for Sn at the interface of the symmetric cell 4 after a short circuit.
FIG. 16 shows the results of constant current cycle tests of a symmetric cell 2, a symmetric cell 5, and a symmetric cell 6.
FIG. 17 shows the results of a constant current cycle test of a symmetric cell 7.
FIG. 18 is the results of XRD measurement of the interface of the symmetric cell 7 after a short circuit.
FIG. 19 is an SEM image of the interface of the symmetric cell 7 after a short circuit.
FIG. 20A is an SEM-EDS image for Sn at the interface of the symmetric cell 7 after a short circuit.
FIG. 20B is an SEM-EDS image for I at the interface of the symmetric cell 7 after a short circuit.
FIG. 21A shows the results of a constant current cycle test of the symmetric cell 3 at room temperature.
FIG. 21B shows the results of a constant current cycle test of the symmetric cell 4 at room temperature.
FIG. 22 is the results of XRD measurement of the interfaces of the symmetric cell 3 and the symmetric cell 4 after constant current cycle tests at room temperature.
FIG. 23 is an SEM image of the interface of the symmetric cell 4 after a constant current cycle test at room temperature.

### [Description of Embodiments]

### (Negative Electrode Composite)

The negative electrode composite of the present invention includes (1) a negative electrode active material containing Li and an element M that is solid soluble in Li as main components, and (2) a substance X having a higher redox potential than the negative electrode active material or having no electrode activity.

Here, "containing as main components" means that the total molar content of Li and the element M that is solid soluble in Li in the negative electrode active material is 50% or more of all components constituting the negative electrode active material. The total molar content is preferably 60% or more, more preferably 70% or more, more preferably 80% or more, more preferably 90% or more, more preferably 95% or more, more preferably 97% or more, more preferably 98% or more, more preferably 99% or more, and most preferably 100%.

The element M that is solid soluble in Li (hereinafter also simply referred to as element M) is not particularly limited as long as it is an element that is solid soluble in Li. Here, the solid solution refers to two or more kinds of elements dissolved into each other to form a uniform solid state. Being solid soluble in Li substantially means being solid soluble in Li having a body-centered cubic structure or Li in a metastable phase.

The negative electrode active material preferably contains a solid solution of Li and element M as a main component, and more preferably is a solid solution of Li and element M. The solid solution means a state of being substantially a solid solution. Being substantially a solid solution as used herein refers to not only a state in which Li and element M are a complete solid solution, but also a state in which unreacted Li and element M are finely dispersed in a solid solution of Li and element M. The finely dispersed unreacted Li and element M often have no particular adverse effect on the performance, but are preferably 5 parts by volume or less with respect to 100 parts by volume of the solid solution, more preferably 4 parts by volume or less, more preferably 3 parts by volume or less, more preferably 2 parts by volume or less, more preferably 1 part by volume or less, more preferably 0.5 parts by volume or less, and more preferably 0.1 parts by volume or less.

Element M may be one element or a plurality of elements, but is preferably at least one element selected from Mg, Al, Zn, Au, Ag, Pt, Na, In, and Bi. Further, it is more preferable to contain at least Mg as element M, and it is more preferable to contain Mg as a main component.

In the negative electrode active material, the molar ratio of Li to element M is not particularly limited, but for example, the molar ratio of Li to element M is preferably Li:element M = 0.999:0.001 to 0.300:0.700, more preferably 0.999:0.001 to 0.400:0.600, more preferably 0.999:0.001 to 0.500:0.500, and more preferably 0.999:0.001 to 0.700:0.300. More specifically, when element M is Mg, the molar ratio of Li to Mg is preferably Li:Mg = 0.999:0.001 to 0.300:0.700, and more preferably 0.999:0.001 to 0.700:0.300. When element M is Al, the molar ratio of Li to Al is preferably Li:Al = 0.999:0.001 to 0.700:0.300, and more preferably 0.999:0.001 to 0.900:0.100. When element M is Zn, the molar ratio of Li to Zn is preferably Li:Zn = 0.999:0.001 to 0.700:0.300, and more preferably 0.999:0.001 to 0.900:0.100. When element M is Au, the molar ratio of Li to Au is preferably Li:Au = 0.999:0.001 to 0.700:0.300, and more preferably 0.999:0.001 to 0.900:0.100. When element M is Ag, the molar ratio of Li to Ag is preferably Li:Ag = 0.999:0.001 to 0.700:0.300, and more preferably 0.999:0.001 to 0.900:0.100. When element M is Pt, the molar ratio of Li to Pt is preferably Li:Pt = 0.999:0.001 to 0.700:0.300, and more preferably 0.999:0.001 to 0.900:0.100. When element M is Na, the molar ratio of Li to Na is preferably Li:Na = 0.999:0.001 to 0.700:0.300, and more preferably 0.999:0.001 to 0.900:0.100. When element M is In, the molar ratio of Li to In is preferably Li:In = 0.999:0.001 to 0.700:0.300, and more preferably 0.999:0.001 to 0.900:0.100. When element M is Bi, the molar ratio of Li to Bi is preferably Li:Bi = 0.999:0.001 to 0.700:0.300, and more preferably 0.999:0.001 to 0.900:0.100. Including these substances in the negative electrode active material at these molar ratios makes it possible to provide a negative electrode composite having excellent dissolution and precipitation characteristics.

The negative electrode active material can be produced by combining raw materials including Li and the element M that is solid soluble in Li and having at least parts of both to react with each other. The raw materials including Li and the element M that is solid soluble in Li may be, for example, a single metal such as Li, Mg, Al, Zn, Au, Ag, Pt, Na, In or Bi, or may be a sulfide, oxide or the like of the element M. As the sulfide including element M, one that reacts with Li to form a lithium sulfide and a lithium alloy is more preferable. As the oxide including element M, one that reacts with Li to form a lithium oxide and a lithium alloy is more preferable. Among these raw materials, simple metals are more preferable.

Examples of the method for producing the negative electrode active material include a method of mixing element M with Li, a method of laminating element M and lithium, and a method of allowing element M and Li to coexist during preparation of Li-metal. Examples of the method of mixing element M with Li include a method of mixing element M with molten Li and a method of performing mechanochemical treatment on Li and element M. Ball mills can be used as the treatment apparatus for the mechanochemical treatment. Ball mills are preferable because large mechanical energy can be obtained. Among ball mills, a planetary ball mill is preferable because the pot rotates on its own axis and the base plate revolves in the opposite direction to the rotation so that high impact energy can be efficiently generated.

The treatment conditions can be appropriately set in accordance with the treatment apparatus to be used. For example, when a planetary ball mill is used, examples of the conditions include a rotation speed of 160 to 400 rotations per minute and a processing time of 0.1 to 120 hours. In order to prevent the lithium salt of the raw material from reacting with water or oxygen, it is preferable that the treatment is carried out in an inert atmosphere (for example, an argon atmosphere) using a glove box or the like in an environment having a moisture concentration of 1000 ppm or less and an oxygen concentration of 1000 ppm or less.

Substance X is a substance having a higher redox potential than the negative electrode active material or having no electrode activity. Substance X is not particularly limited as long as it satisfies the above conditions, but the resistance per unit area is preferably 100 < cm² or less, more preferably 10 Ω cm² or less, and more preferably 3 Ω cm² or less. In addition, it is preferable to have an ionic conductivity of 10⁻⁸ S▪cm⁻¹ or more.

Any metal (such as Al, Zn, Au, Ag, Na, In, or Bi) having a low solid solubility in Li can function as substance X, but substance X is more preferably a metal or semimetal that can be alloyed with Li but is not solid soluble in Li and/or an alloy of the metal or semimetal and Li. Examples of the metal include Sn, Ni, and Fe, examples of the semimetal include Si, and examples of the alloy of Li and a metal that is not solid soluble in Li include Li₄Sn, Li₂₂Sn₅, Li_{4.4}Si, and the like. In addition, substance X is preferably at least one selected from these substances, and more preferably, at least Sn is selected.

Substance X preferably covers the negative electrode active material and, in a battery using a solid electrolyte, it is more preferably present between the negative electrode active material and the solid electrolyte. The presence of substance X covering the negative electrode active material or between the negative electrode active material and the solid electrolyte makes it possible to provide a negative electrode composite having excellent dissolution and precipitation characteristics. In addition, it is more preferable that substance X covers the entire interface between the negative electrode active material and the solid electrolyte. The thickness of the covering substance X is not particularly limited, but can be set, for example, in the range of 5 to 1000 nm, preferably in the range of 50 to 1000 nm, more preferably in the range of 50 to 500 nm, more preferably in the range of 100 to 500 nm, and more preferably in the range of 200 to 500 nm. The thickness of the covering substance X may be uniform or uneven, but is preferably uniform. The degree of coverage is preferably 50% or more of the surface of the negative electrode active material, more preferably 60% or more, more preferably 70% or more, more preferably 80% or more, more preferably 90% or more, more preferably 99% or more, and most preferably 100%. In addition, substance X is preferably present at 50% or more of the interface between the negative electrode active material and the solid electrolyte, more preferably at 60% or more, more preferably at 70% or more, more preferably at 80% or more, more preferably at 90% or more, more preferably at 99% or more, and most preferably at 100%.

Alternatively, substance X may be stacked on a negative electrode layer including the negative electrode active material. Stacking of substance X on the negative electrode can reduce reductive decomposition of the solid electrolyte layer, and suppress deterioration of the performance.

Accordingly, the negative electrode composite of the present invention may comprise: a negative electrode layer including a negative electrode active material containing Li and an element M that is solid soluble in Li as main components; and a thin layer stacked on the negative electrode layer and containing substance X as a main component. Providing the thin layer on the negative electrode layer makes it possible to provide a negative electrode composite having superior dissolution and precipitation characteristics.

The phrase "containing as a main component" used herein means that the molar content of substance X in the thin layer is 50% or more of all components constituting the thin layer. The molar content is preferably 60% or more, more preferably 70% or more, more preferably 80% or more, more preferably 90% or more, more preferably 95% or more, more preferably 97% or more, more preferably 98% or more, more preferably 99% or more, and most preferably 100%.

The form of the negative electrode layer is not particularly limited, but it is preferably a layer containing a solid solution of Li and element M as a main component, and more preferably a layer of the solid solution.

The shape of the negative electrode layer is not particularly limited as long as it can function as a negative electrode composite, and may take various shapes such as a cylindrical shape, an elliptical cylindrical shape, a rod shape, a foil shape, or a film shape. The thickness of the negative electrode layer is not particularly limited, but when the negative electrode layer is in the form of a membrane or a film, the thickness can be set, for example, in the range of 5 to 2000 nm, and is preferably set in the range of 5 to 1000 nm, more preferably in the range of 50 to 1000 nm, and more preferably in the range of 50 to 500 nm.

The negative electrode composite (in particular, the negative electrode layer) may contain a binder, a conductive material, a solid electrolyte, and the like. The negative electrode composite may also contain a negative electrode active material different from the above-mentioned negative electrode active material containing Li and the element M that is solid soluble in Li as main components. Examples of the negative electrode active material include carbon-based materials such as natural graphite, artificial graphite, acetylene black, Ketchen black, Denka black, carbon black and VGCF, Si, Li alloys, Na alloys, metals such as Au, Pt, Pd, Ag, Al, Bi, Sn, Sb, Zn, Mg, K, Ca and Na, various transition metal oxides such as Li_{4/3}Ti_{5/3}O₄, Li₃V₂(PO₄)₃, and SnO, and the like. These negative electrode active materials may be used alone or in combination of two or more.

The negative electrode active material can be contained in an amount of 40 parts by weight or less per 100 parts by weight of the total amount of Li and element M in the negative electrode composite, preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

The binder is not particularly limited, and examples of the binder include polyvinylidene fluoride, polytetrafluoroethylene, polyvinyl alcohol, polyvinyl acetate, polymethyl methacrylate, polyethylene, styrene butadiene rubber, acrylonitrile butadiene rubber, copolymers thereof, and the like. When the binder and the negative electrode active material or the like of the present invention are mixed using a solvent, the solvent is preferably, but not particularly limited to, a solvent which does not cause a side reaction with the negative electrode active material of the present invention.

The binder can be contained in an amount of 40 parts by weight or less per 100 parts by weight of the total amount of Li and element M in the negative electrode composite, preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

The conductive material is not particularly limited, and examples of the conductive material include natural graphite, artificial graphite, acetylene black, Ketchen black, Denka black, carbon black, vapor-grown carbon fiber (VGCF), and the like.

The conductive material can be contained in an amount of 40 parts by weight or less per 100 parts by weight of the total amount of Li and element M in the negative electrode composite, preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

The solid electrolyte included in the negative electrode composite is not particularly limited, and a solid electrolyte used in the preparation of a secondary battery to be described later can be used.

The solid electrolyte can be contained in an amount of 40 parts by weight or less per 100 parts by weight of the total amount of Li and element M in the negative electrode composite, preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

Although the thickness of the thin layer is not particularly limited, the thin layer preferably has a thickness in the range of 5 to 500 nm, more preferably in the range of 50 to 500 nm, more preferably in the range of 100 to 500 nm, and more preferably in the range of 200 to 500 nm. The thickness of the thin layer in the range of 5 to 500 nm makes it possible to provide a negative electrode composite having superior dissolution and precipitation characteristics. Preferably, the thin layer has an even thickness.

The method of stacking the thin layer on the negative electrode layer is not particularly limited as long as the thin layer can be formed on the negative electrode layer. For example, vapor phase methods such as physical vapor deposition (PVD) and chemical vapor deposition (CVD), liquid phase methods such as an electroplating and coating, and solid phase methods such as a Langmuir-Blodgett (LB) technique can be used. Examples of PVD include vacuum evaporation and sputtering, and sputtering is particularly preferred from the viewpoint of mass production. The surface of the negative electrode layer may be polished before the formation of the thin layer so that the unevenness of the surface of the negative electrode layer can be reduced.

The present invention also provides a negative electrode composite comprising a negative electrode layer including a negative electrode active material containing Li and Mg as main components.

The phrase "containing as main components" as used herein means that the total molar content of Li and Mg in the negative electrode active material is 50% or more of all components constituting the negative electrode active material. The molar content is preferably 60% or more, more preferably 70% or more, more preferably 80% or more, more preferably 90% or more, more preferably 95% or more, more preferably 97% or more, more preferably 98% or more, more preferably 99% or more, and most preferably 100%.

The description of the negative electrode layer is the same as that provided above. The negative electrode active material preferably contains a solid solution of Li and Mg as a main component, and more preferably, is a solid solution of Li and Mg. The negative electrode layer is more preferably a layer of a solid solution of Li and Mg, and the molar ratio of Li to Mg is more preferably Li:Mg = 0.999:0.001 to 0.300:0.700, and more preferably 0.999:0.001 to 0.700:0.300. Here, the meanings of "containing a solid solution as a main component" and "solid solution" are as described above.

The present invention also provides a negative electrode composite comprising: a negative electrode layer including a negative electrode active material; and a thin layer stacked on the negative electrode layer and containing Sn and/or an alloy of Sn and Li as main components.

The term "containing as main components" as used herein means that the molar content of Sn and/or an alloy of Sn and Li is 50% or more of all components constituting the thin layer. The molar content is preferably 60% or more, more preferably 70% or more, more preferably 80% or more, more preferably 90% or more, more preferably 95% or more, more preferably 97% or more, more preferably 98% or more, more preferably 99% or more, and most preferably 100%.

The description of the thin layer is the same as that provided above. In addition, Sn and/or an alloy of Sn and Li preferably exhibits a resistance of 10 Ω cm² or less, and more preferably, the thin layer has a thickness in the range of 100 to 500 nm, and more preferably has a thickness in the range of 200 to 500 nm. Since the alloy of Sn and Li exhibits a resistance of 10 Ω cm² or less, a negative electrode composite having superior dissolution and precipitation characteristics can be provided.

The negative electrode composite may consist only of a negative electrode active material containing Li and element M as main components, or may be a mixture of a negative electrode active material with the above-mentioned binder, conductive material, negative electrode active material, solid electrolyte used in the preparation of a secondary battery to be described later, or the like.

The negative electrode composite of the present invention may be further combined with a current collector.

The material, shape, and the like of the current collector are not particularly limited as long as the current collector can be combined with the negative electrode composite of the present invention and can function as a current collector. The shape of the current collector may be like an even alloy plate or a shape having a hole. The current collector may also be in the form of a foil, a sheet, or a film.

Examples of the material of the current collector include Ni, Cu, Ti, Fe, Co, Ge, Cr, Mo, W, Ru, Pd, stainless steel, steel, and the like.

In addition to the above materials, the current collector may be coated with gold or aluminum. The thickness of the coating is not particularly limited, but is preferably 10 nm to 100 pm. Also, the coating preferably has an even thickness.

The coating method is not particularly limited as long as the current collector can be coated, but the coating can be formed by vapor deposition on the surface using a sputter coater, for example. The negative electrode composite of the present invention may be a negative electrode composite directly formed on a current collector.

### (Method for Producing Negative Electrode Composite)

The method for producing the negative electrode composite is not particularly limited as long as the negative electrode active material prepared by the production method can be combined with a raw material including a substance X having a higher redox potential than the negative electrode active material or having no electrode activity. The negative electrode composite may further optionally be combined with a binder, a conductive material, an electrolyte, and the like.

When the negative electrode composite has a thin layer, the negative electrode composite can be prepared by optionally mixing a binder, a conductive material, an electrolyte, and the like with a negative electrode active material, pressing the obtained mixture to obtain a pellet-like negative electrode layer, and forming a thin layer thereon by a method of stacking the thin layer on the negative electrode layer.

The batteries in which these negative electrode composites are used are not particularly limited, but the negative electrode composites are preferably used in secondary batteries, and more preferably in all-solid-state secondary batteries. Since the negative electrode composite of the present invention has excellent dissolution and precipitation characteristics, it can be suitably used as negative electrodes of all-solid-state secondary batteries.

### (Secondary Battery)

The present invention provides a secondary battery comprising the negative electrode composite of the present invention, an electrolyte layer in contact with the thin layer, and a positive electrode composite including a positive electrode active material.

The present invention also provides a secondary battery comprising the negative electrode composite of the present invention, an electrolyte layer, and a positive electrode composite including a positive electrode active material.

The secondary battery may be a general lithium secondary battery or an all-solid-state secondary battery.

Hereinafter, the configuration of the secondary battery will be described.

### (Positive Electrode Composite)

The positive electrode composite includes a positive electrode active material. The positive electrode composite is not particularly limited as long as it can be used as a secondary battery in combination with the negative electrode composite of the present invention, and may be configured by combining positive electrode active materials.

The positive electrode active material preferably has a high redox potential, and more preferably has an average charge/discharge potential of 3.5 V or more with respect to the redox potential of Li. The positive electrode composite may consist only of a positive electrode active material, or may be a mixture of a positive electrode active material with a binder, a conductive material, an electrolyte, or the like.

Examples of the positive electrode active material include Li₄Ti₅O₁₂, LiCoO₂, LiMnO₂, LiVO₂, LiCrO₂, LiNiO₂, Li₂NiMn₃O₈, Li(Ni, Co, Mn)O₂, FeS₂, TiS₂, LiFeO₂, Li₃V₂(PO₄)₃, LiMn₂O₄, Li₂MnO₃-Li (Ni, Co, Mn)O₂, Li₇CuS₄, Li₅CuS₃, Li₃CuS₂, MoSₓ (x ≥ 2), S, Li₂S, TiSₓ, V₂O₅, and the like.

The positive electrode composite can be obtained in the form of a pellet by, for example, pressing a positive electrode active material, optionally mixed with a binder, a conductive material, an electrolyte or the like.

The positive electrode composite may further comprise a current collector. The description of the current collector is the same as that provided above for the negative electrode composite.

Electrolyte layers used in secondary batteries can be roughly divided into a type composed mainly of an electrolytic solution and a type composed of a solid electrolyte.

### (1) Nonaqueous Electrolyte Layer

The nonaqueous electrolyte layer used in the present invention can be composed of a mixture of an electrolyte and a nonaqueous solvent.

Examples of the electrolyte include LiClO₄, LiPF₆, LiBF₄, LiCFsSOs, LiAsF₆, LiB(C₆H₅)₄, LiCl, LiBr, CH₃SO₃Li, CFsSOsLi, LiN(SO₂CF₃)_{2,} LiN(SO₂C₂F₅)₂, LiC(SO₂CF₃)₃, LiN(SO₃CF₃)₂, and the like.

The nonaqueous solvent is not particularly limited, and examples thereof include carbonates, ethers, ketones, sulfolane-based compounds, lactones, nitriles, chlorinated hydrocarbons, amines, esters, amides, phosphoric acid ester compounds, and the like. Typical examples of these are 1,2-dimethoxyethane, 1,2-diethoxyethane, tetrahydrofuran, 2-methyltetrahydrofuran, ethylene carbonate, vinylene carbonate, methylformate, dimethylsulfoxide, propylene carbonate, acetonitrile, γ-butyrolactone, dimethylformamide, dimethyl carbonate, diethyl carbonate, sulfolane, ethylmethyl carbonate, 1,4-dioxane, 4-methyl-2-pentanone, 1,3-dioxolane, 4-methyl-1,3-dioxolane, diethyl ether, sulfolane, methyl sulfolane, propionitrile, benzonitrile, butyronitrile, valeronitrile, 1,2-dichloroethane, trimethyl phosphate, triethyl phosphate, and the like. These can be used alone or in combination of two or more.

### (2) Solid Electrolyte Layer

The solid electrolyte constituting the solid electrolyte layer is not particularly limited, and solid electrolytes used in all-solid-state secondary batteries can be used. The solid electrolyte is composed of, for example, a sulfide-based solid electrolyte or an oxide-based solid electrolyte.

Examples of the sulfide-based solid electrolyte include Li₂S-P₂S₅, Li₂S-P₂S₅-LiI, Li₂S-P₂S₅-LiI-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S_{3,} Li₂S-P₂S₅-GeS₂, LiI-Li₂S-P₂O_{5,} LiI-Li₃PO₄-P₂S₅, Li₂S-P₂S₅, Li₁₀GeP₂S_{12,} Li_{9.54}Si_{1.74}P_{1.44}Si_{11.7}Cl_{0.3}, Li₇P₃S₁₁, Li₃PS₄, Li_{6-y}PS₅₋ₓβ_{1+y} (β = Cl or Br), Li_{3.25}P_{0.75}S₄, and the like. These sulfide-based solid electrolytes may be used alone or in combination of two or more.

Examples of the oxide-based solid electrolyte material include Li₂O-B₂O₃-P₂O₃, Li₂O-SiO₂, Li₂O-P₂O₅, Li₅La₃Ta₂O₁₂, Li₇La₃Zr₂O₁₂, Li₆BaLa₂Ta₂O₁₂, Li_{3.6}Si_{0.6}P_{0.4}O₄, Li₃BO₃-Li₂SO₄-Li₂CO₃, and the like. These oxide-based solid electrolytes may be used alone or in combination of two or more.

Among these, the solid electrolyte is preferably a sulfide-based solid electrolyte.

In addition to the above-mentioned solid electrolyte materials, the solid electrolyte layer may include other components used in all-solid-state secondary batteries. Examples of the other components include metal oxides such as P, As, Ti, Fe, Zn, and Bi, and binders such as polyvinylidene fluoride, polytetrafluoroethylene, polyvinyl alcohol, polyvinyl acetate, polymethyl methacrylate, and polyethylene.

The solid electrolyte may be in a glass state or a glass ceramic state. The glass state means a substantially noncrystalline state. Here, the substantially noncrystalline state includes, the 100% noncrystalline state as well as a state where a crystalline solid electrolyte is finely dispersed in a noncrystalline solid electrolyte. The glass ceramic state means a state generated as a result of heating a solid electrolyte in the glass state to a temperature equal to or higher than the glass transition point.

The solid electrolyte in the glass ceramic state may be in a state in which a crystalline phase is dispersed in a glass amorphous phase. The percentage of the crystalline phase can be determined by transmission electron microscopy, crystal structure analysis by the Rietveld method, or the like.

Furthermore, the solid electrolyte in the glass ceramic state may have no glass transition point that was present in the corresponding solid electrolyte in the glass state.

The solid electrolyte can be formed into a solid electrolyte layer, for example, by being pressed so as to have a predetermined thickness. The pressure of the press may be selected from the pressures in a range of 50 to 2000 MPa.

The method for producing the solid electrolyte layer is not particularly limited as long as the materials of the solid electrolyte can be mixed. As the materials of the solid electrolyte, the above-described materials of the solid electrolyte can be used.

The secondary battery of the present invention preferably comprises a buffer layer between the negative electrode composite and the electrolyte layer when the negative electrode composite does not have a thin layer or is not coated with substance X.

When either the negative electrode composite or the electrolyte layer is coated, the buffer layer may cover the entire surface where the negative electrode composite and the electrolyte layer are in contact with each other or may cover only a part of the surface. The degree of coverage is preferably 20% or more of the surface of the negative electrode composite, more preferably 30% or more, more preferably 40% or more, more preferably 50% or more, more preferably 60% or more, more preferably 70% or more, more preferably 80% or more, more preferably 90% or more, more preferably 99% or more, and most preferably 100%.

The material of the buffer layer is not particularly limited as long as it does not adversely affect the effect of the negative electrode composite of the present invention, and examples thereof include a conductive polymer, a metal material, and the like.

Examples of the conductive polymer include polyethylene oxide, polypropylene oxide, polythiophene, polyaniline, and the like. Examples of the inorganic material include alumina, AlF₃, Cu, Ni, Co, Ti, Fe, Cr, Mo, W, Pd, Pt, and the like. The above conductive polymers and metal materials may be used alone or in combination with a plurality of materials. In addition to the above materials, a binder, a conductive material, an electrolyte, a negative electrode active material, and the like may be further mixed.

The thickness of the buffer layer is not particularly limited, but can be suitably set within a range of 10 nm to 100 pm.

### (Method for Producing Secondary Battery)

The present invention also provides a method for producing a secondary battery using the negative electrode composite of the present invention.

### (I) Lithium Secondary Battery

In the case of producing a lithium secondary battery using an electrolytic solution, for example, a stack of the negative electrode composite of the present invention, a separator, and the positive electrode composite for the lithium secondary battery as described above is inserted into a battery can, and a mixture of an electrolyte and a nonaqueous solvent is poured into the battery can to obtain a lithium secondary battery.

As the separator, a microporous polymer film is preferably used. Specifically, a separator made of a polyolefin polymer, such as nylon, cellulose acetate, nitrocellulose, polysulfone, polyacrylonitrile, polyvinylidene fluoride, polypropylene, polyethylene, or polybutene, can be used. The positive electrode, separator, and negative electrode may be stacked or rolled up.

### (II) All-Solid-State Battery

An all-solid-state battery can be obtained by, for example, stacking a current collector, the negative electrode composite of the present invention, a solid electrolyte layer, the positive electrode composite as described above, and a current collector, pressing them to obtain a cell, and fixing the cell to a container.

When the negative electrode composite does not have a thin layer, the above-mentioned buffer layer may be provided between the negative electrode composite and the solid electrolyte layer.

### [Examples]

Hereinafter, the present invention will be described in more detail by way of Examples and Comparative Examples, but the present invention is not limited thereto. In the following examples and comparative examples, Li₂S manufactured by Mitsuwa Chemical Co., Ltd., LiI and P₂S₅ manufactured by Aldrich, Sn manufactured by Nilaco Co., Zn manufactured by Nilaco Co., and Li foil manufactured by Furuuchi Chemical Co. were used. In addition, Au recast by FDK Factory was used.

In the following Examples and Comparative Examples, a planetary ball mill PULVERISETTE 5 (P-5) manufactured by Fritsch GmbH was used for mechanochemical treatment. As the sputtering apparatus, QUICK COATER SC-701MkII ADVANCED manufactured by Sanyu Electron Co., Ltd. was used. For cold isostatic pressing (CIP), NPa-6003 manufactured by NPa System Co., Ltd. was used. As the measuring apparatus for constant current cycle tests, BTS-2004 manufactured by Nagano was used. As the X-ray diffractometer, a fully automatic multi-purpose X-ray diffractometer SmartLab manufactured by Rigaku Corporation was used. As the scanning electron microscope (SEM), a field emission scanning electron microscope (FE-SEM, SU8200) manufactured by Hitachi High-Tech Co. was used, and for the energy dispersive X-ray analysis (EDS), EMAXEvolution X-Max manufactured by Horiba Ltd. was used.

### (Preparation of Symmetric Cell Having Li-Mg Negative Electrode Active Material)

### Example 1

A symmetric cell 1 having a Li-Mg negative electrode active material was prepared by the following procedure. The following cell preparation was performed in a glove box in an Ar atmosphere.

### Preparation of Electrolyte Pellet

### (I: Preparation of Li₃PS₄ Glass Solid Electrolyte Powder)

The LPS solid electrolyte pellet of the symmetric cell used in this experiment was prepared as follows.

Li₂S and P₂S₅ were put into a zirconia pot (250 mL) at a ratio of 75:25 together with zirconia balls (4 mmϕ, 250 g), and subjected to a mechanochemical treatment using the aforementioned planetary ball mill device P-5 to prepare a Li₃PS₄ glass solid electrolyte powder (LPS powder). The mechanochemical treatment was performed under the conditions that the number of revolutions of the platen was 210 rpm and that the treatment time was 70 hours.

### (II: Preparation of LPS Pellet)

150 mg of the LPS powder prepared in the above step I was pressed in a cylindrical cemented carbide die with a 10 mmϕ hole at a pressure of 360 MPa for 5 minutes using two cemented carbide rods to prepare an LPS pellet.

### (III: Preparation of Li-Mg Electrode Foil)

Li_{0.93}Mg_{0.07} foil having a film thickness of 250 pm manufactured by Honjo Metal Co., Ltd. was used.

### (IV: Preparation of Symmetric Cell)

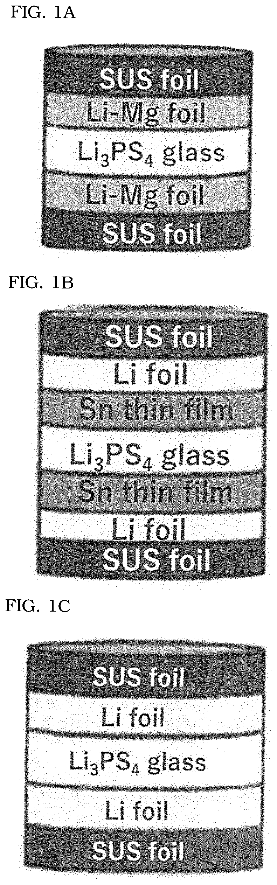

The 9.0 mmϕ Li_{0.93}Mg_{0.07} foil prepared in the above step III was attached to both sides of the LPS pellet prepared in the above step II. A 10.0 mmϕ SUS foil having a film thickness of 20 pm was further attached to both sides thereof. This was vacuum-sealed in an aluminum laminate film having a thickness of 150 pm (50 pm of which was an aluminum evaporated film). Thereafter, cold isostatic pressing (CIP) was performed at 80 MPa for 2 minutes to prepare a symmetric cell 1. A schematic diagram of the prepared symmetric cell 1 is shown in FIG. 1A.

### (Preparation of Symmetric Cell Having Sn Thin Film)

### Example 2

A symmetric cell with a Sn thin film was prepared. The LPS pellet used for the symmetric cell was the same as that prepared in step II above.

### (V: Formation of Thin Film)

A Sn thin film was formed using Sn on both sides of the LPS pellet prepared in the above step II. Sputtering was performed using Ar as the sputtering gas for 6 minutes at a sputtering power of about 6.5 W to provide a Sn thin film having a thickness of 200 nm.

A symmetric cell 2 was prepared in the same manner as in step IV, except that a Li foil having a film thickness of 250 µm was attached instead of the Li_{0.93}Mg_{0.07} foil to both sides of the LPS pellet on which the thin film prepared in the above step V had been formed. A schematic diagram of the prepared symmetric cell 2 is shown in FIG. 1B.

### Comparative Example 1

As a comparative example, a symmetric cell 3 was prepared in the same manner as in step IV, except that a Li foil having a film thickness of 250 pm was attached instead of the Li_{0.93}Mg_{0.07} foil to both sides of the LPS pellet prepared in the above step II. A schematic diagram of the prepared symmetric cell 3 is shown in FIG. 1C.

### (Constant Current Cycle Test)

A constant current cycle test was performed using the symmetric cells 1 to 3 prepared in Examples 1 and 2 and Comparative Example 1. In the cycle test, the test temperature was 100 °C, the cell confining pressure was 1 MPa, and the energization was conducted with one hour each of charging and discharging defined as one cycle and with the current increased from 0.2 mA by 0.2 mA every five cycles.

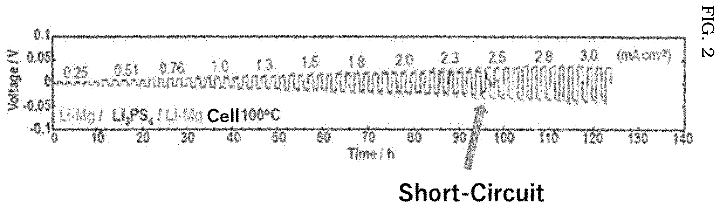

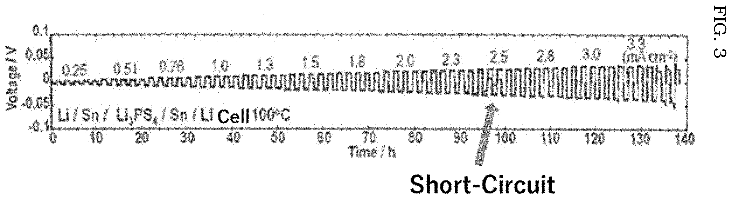

The results of the constant current cycle tests performed on the symmetric cells 1 to 3 are shown in FIGS. 2 and 3. FIG. 2 shows the results of symmetric cells 1 and 3, and FIG. 3 shows the result of symmetric cells 2 and 3. FIGS. 2 and 3 show that symmetric cells 1 and 2 did not short-circuit even at a current higher than the current density (indicated by the arrows in FIGS. 2 and 3) at which symmetric cell 3 short-circuited, and that symmetric cells 1 and 2 using the negative electrode composite of the present invention have improved dissolution and precipitation characteristics.

In the symmetric cells 1 to 3 after the constant current cycle tests, the interface between the solid electrolyte and the negative electrode after the short circuit was observed by the SEM. For the measurement of the interface, the symmetric cell was cut out perpendicularly to the lamination plane, and the cutout section was observed.

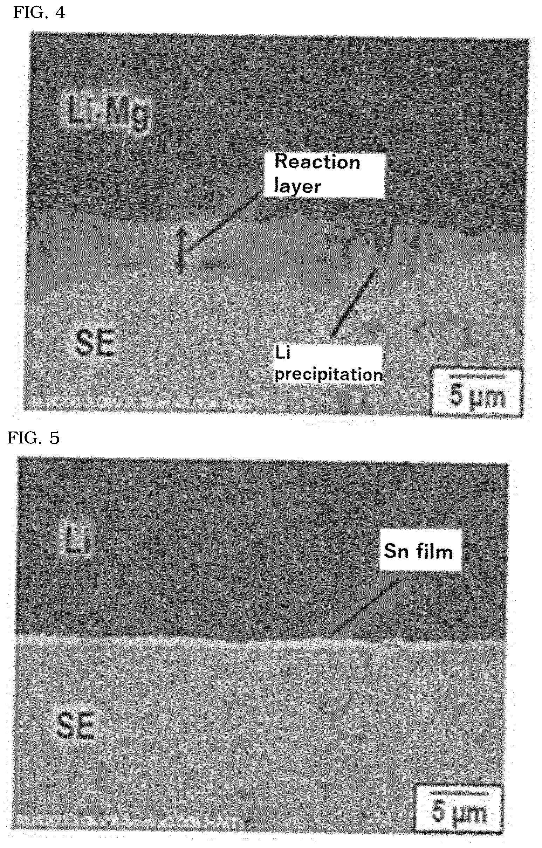

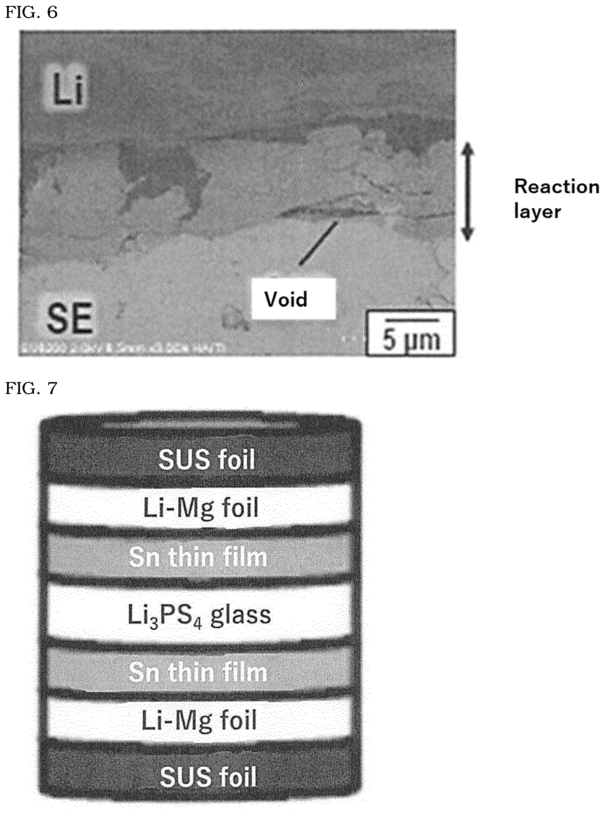

The observation results by the SEM are shown in FIGS. 4 to 6. FIG. 4 is a cross-sectional view of symmetric cell 1 after a short circuit, FIG. 5 is a cross-sectional view of symmetric cell 2 after a short circuit, and FIG. 6 shows symmetric cell 3 after a short circuit. FIGS. 4 and 6 show that a reaction layer was formed at the interface of Li/Li₃PS₄ by the reductive decomposition of Li₃PS₄. In contrast, FIG. 5 shows no reaction layer, indicating that the generation of the reaction layer was suppressed by the Sn thin film. It is presumed that since Sn is not solid soluble in Li, it did not diffuse into Li of the negative electrode, and the form of the layer was maintained.

### (Preparation of Symmetric Cell Having Li-Mg Negative Electrode Active Material and Sn Thin Film)

### Example 3

A Sn thin film was formed using Sn on both sides of the LPS pellet prepared in the above step II. Sputtering was performed for 6 minutes in the same manner as described above to provide a Sn thin film having a thickness of 200 nm. A 10.0 mmϕ Li_{0.93}Mg_{0.07} foil prepared in the same manner as in the above step III was attached thereto.

A 10.0 mmϕ SUS foil having a film thickness of 20 pm was further attached to both sides thereof. This was vacuum-sealed in an aluminum laminate film. Thereafter, cold isostatic pressing (CIP) was performed under the same conditions as described above to prepare a symmetric cell 4. A schematic diagram of the prepared symmetric cell 4 is shown in FIG. 7.

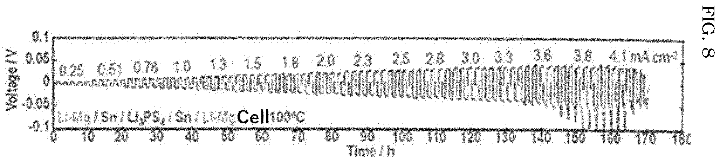

A constant current cycle test was performed on the prepared symmetric cell 4 in the same manner as described above. The results are shown in FIG. 8. As shown in FIG. 8, symmetric cell 4 did not short-circuit at even higher current densities than symmetric cell 1. Thus, symmetric cell 4 was shown to have particularly excellent dissolution and precipitation characteristics.

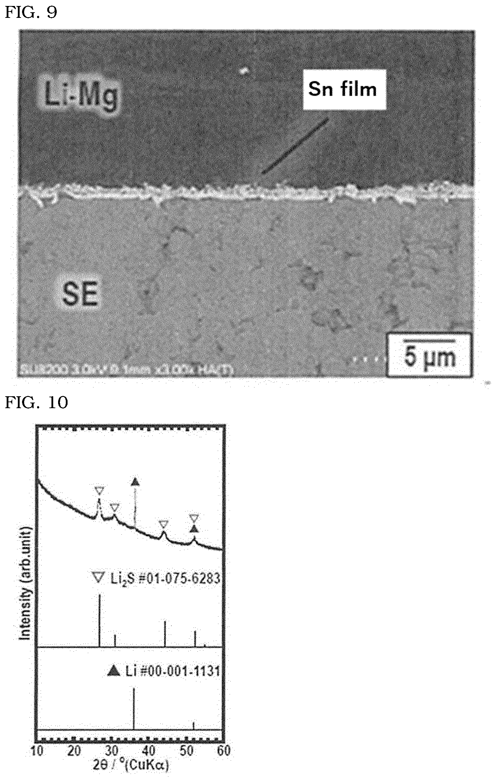

For the symmetric cell 4 after the constant current cycle test, the interface between the solid electrolyte and the negative electrode after the short circuit was observed by the SEM. The observation results by the SEM are shown in FIG. 9. FIG. 9 shows that there was no reaction layer in the symmetric cell 4, indicating that the generation of the reaction layer was suppressed by the Sn thin film even when the Li-Mg negative electrode active material was used.

### (XRD Measurement of Symmetric Cell)

X-ray diffraction (XRD) measurement was performed to analyze the structure of the interface between the solid electrolyte and the negative electrode of each of symmetric cells 1, 2, and 4 short-circuited in the above constant current cycle tests. SmartLab was used as the X-ray diffractometer, and structural analysis was performed with CuKα rays (= 1.54056 × 10⁻¹⁰m) at a tube voltage of 45 kV, a tube current of 200 mA, a scanning angle of 2θ = 10° to 60°, a sampling interval of 0.02°, and a scanning speed of 10° min⁻¹. Since the prepared symmetric cell was unstable in the atmosphere, the attachment of the sample to the nonreflective sample plate and the sealing of the sample into the airtight sample holder were all performed in a glove box under an argon atmosphere. The measurement was performed after the SUS foil of the short-circuited symmetric cell was peeled off.

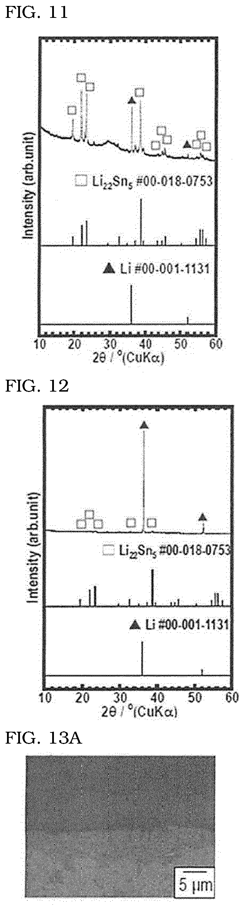

The results of XRD measurements are shown in FIGS. 10 to 12. FIG. 10 shows the measurement result of symmetric cell 1, FIG. 11 shows the measurement result of symmetric cell 2, and FIG. 12 shows the measurement result of measured cell 4. The figures also include the results of a measurement of Li₂₂Sn₅, a measurement of Li, and a measurement of Li₂S for comparison.

FIG. 10 shows that a peak of Li₂S, which is a reduction product of Li, was observed at the interface of symmetric cell 1. FIG. 11 shows that a peak of Li₂₂Sn₅, which is the most Li-rich alloy phase, was observed at the interface of symmetric cell 2. FIG. 12 shows that a peak of Li₂₂Sn₅ was observed at the interface of symmetric cell 4, indicating that the generation of the reduction product Li₂S was suppressed by the Sn thin film even when the Li-Mg negative electrode active material was used.

### (SEM-EDS Measurement of Symmetric Cell)

The interface between the solid electrolyte and the negative electrode of each of symmetric cells 1, 2, and 4 short-circuited in the above constant current cycle tests was subjected to a SEM-EDS measurement. The measurement was performed at an acceleration voltage of 8 kV.

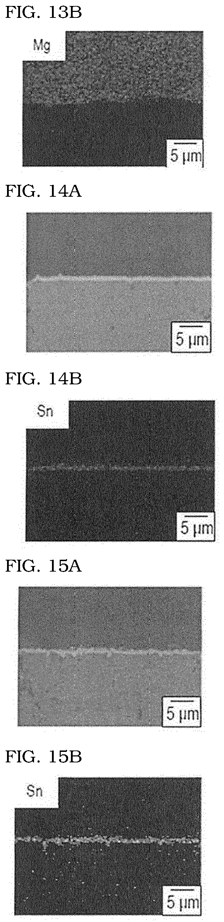

The measurement result of symmetric cell 1 is shown in FIGS. 13A and 13B, the measurement result of symmetric cell 2 is shown in FIGS. 14A and 14B, and the measurement result of symmetric cell 3 is shown in FIGS. 15A and 15B. FIG. 13B shows that Mg did not exist in the reaction layer. FIGS. 14B and 15B show that Sn existed as a film even after the short circuit.

### (Examples of Changing Thickness of Sn Thin Film)

### Example 4

A symmetric cell 5 was prepared in the same manner as in Example 2, except that sputtering was performed for 1 minute and the thickness of the Sn thin film was 60 nm.

### Example 5

A symmetric cell 6 was prepared in the same manner as in Example 2, except that sputtering was performed for 3 minute and the thickness of the Sn thin film was 100 nm.

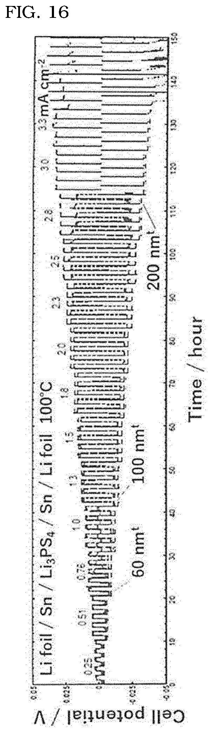

A constant current cycle test was performed on the prepared symmetric cells 5 and 6 in the same manner as described above. The results are shown in FIG. 16. FIG. 16 show the results of symmetric cells 5 and 6 together with the results of symmetric cell 2. FIG. 16 shows that the dissolution and precipitation characteristics are improved by increasing the thickness of the film.

### (Preparation of Symmetric Cell with Different Solid Electrolyte)

### Example 6

A symmetric cell was prepared using, as the solid electrolyte, a pellet prepared using 54Li₃PS₄-46LiI instead of the LPS pellet prepared in the above step II.

### (VI: Preparation of Li₃PS₄•LiI Solid Electrolyte Powder)

Li₂S, P₂S₅, and LiI were put into a zirconia pot (250 mL) at a ratio of Li₂S:P₂S₅:LiI = 52.5:17.5:30, and treated in the same manner as in the above step I to prepare a 54Li₃PS₄-46LiI solid electrolyte powder.

### (VII: Preparation of Li₃PSS₄•LiI Solid Electrolyte Pellet)

A 54Li₃PS₄•46LiI pellet was prepared in the same manner as in the above step II, except that the 54Li₃PS₄•46LiI powder prepared in the above step VI was used instead of the LPS powder.

A symmetric cell 7 was prepared in the same manner as in Example 3, except that the 54Li₃PS₄•46LiI pellet prepared in the above step VII was used.

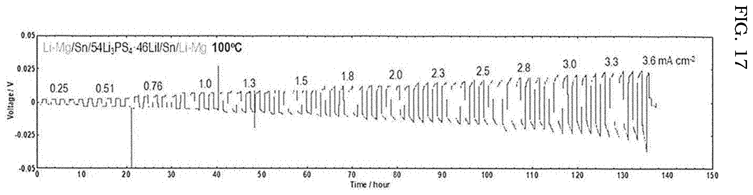

A constant current cycle test was performed on the prepared symmetric cell 7 in the same manner as described above. The results are shown in FIG. 17. FIG. 17 shows that even when 54Li₃PS₄•46LiI is used as the solid electrolyte instead of LPS, the symmetric cell having the Li-Mg negative electrode active material and the Sn thin film has excellent dissolution and precipitation characteristics.

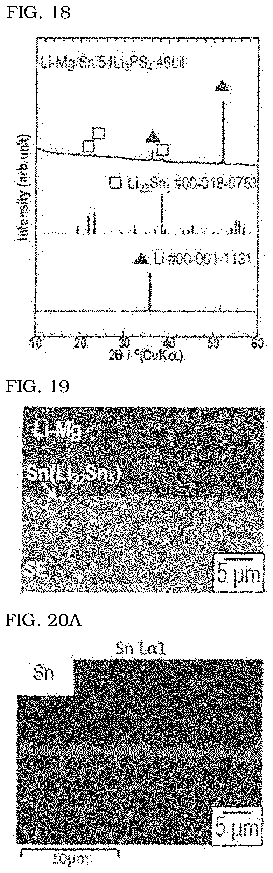

FIG. 18 shows the results of an XRD measurement performed on the symmetric cell 7 after a constant current cycle test. The figure also includes the result of a measurement of Li₂₂Sn₅ and the result of a measurement of Li for comparison. A peak of Li₂₂Sn₅ was observed at the interface of symmetric cell 7, indicating that the generation of the reduction product Li₂S was suppressed by the Sn thin film as in symmetric cell 4.

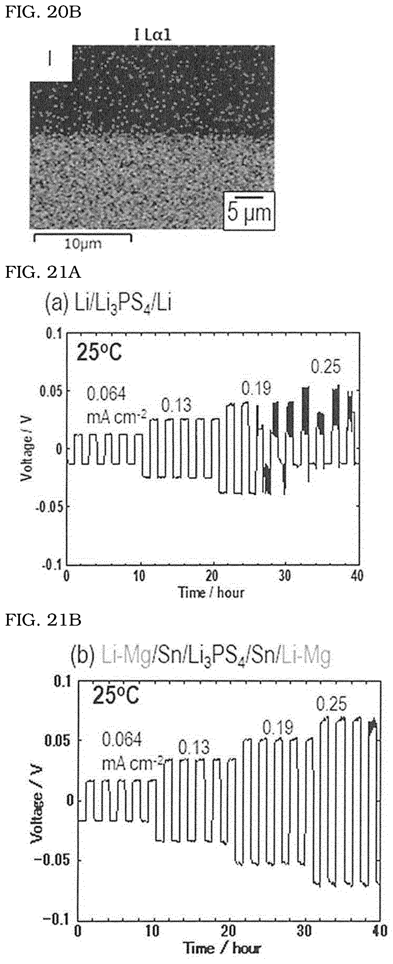

For the symmetric cell 7 after the constant current cycle test, the interface between the solid electrolyte and the negative electrode after the short circuit was observed by the SEM. The observation results by the SEM are shown in FIG. 19. FIGS. 20A and 20B show the measurement results by the SEM-EDS, respectively. FIG. 20A shows the results for Sn, and FIG. 20B shows the results for I. FIG. 19 shows that no reaction layer was formed in symmetric cell 7 as in symmetric cell 4. FIGS. 20A and 20B show that Sn existed as a film even after the short circuit.

### (Evaluation of Dissolution and Precipitation Characteristics of Symmetric Cell at Room Temperature)

Using symmetric cell 4 and symmetric cell 3 (comparison), a constant current cycle test was performed at room temperature to measure the performance. In the cycle test, the test temperature was 25°C, the cell confining pressure was 1 MPa, and the energization was conducted with one hour each of charging and discharging used as one cycle and with the current increased from 0.05 mA by 0.05 mA every five cycles.

The results of the constant current cycle tests are shown in FIGS. 21A and 21B, respectively. FIG. 21A shows the results of symmetric cell 3, and FIG. 21B shows the measurement results of symmetric cell 4. FIGS. 21A and 21B show that symmetric cell 4, which has the Li-Mg negative electrode active material and the Sn thin film, has superior dissolution and precipitation characteristics than symmetric cell 3 even at room temperature.

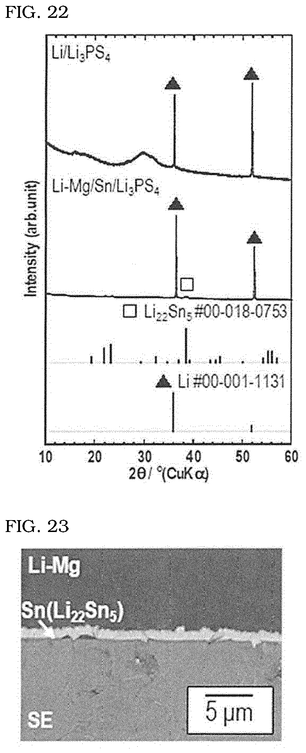

FIG. 22 shows the results of XRD measurements performed on symmetric cells 4 and 3 after the constant current cycle tests. In FIG. 22, the top graph shows the results of symmetric cell 3, and the second graph from the top shows the results of symmetric cell 4. The figure also includes the result of a measurement of Li₂₂Sn₅ and the result of a measurement of Li for comparison. FIG. 22 shows that a peak of Li₂₂Sn₅ was observed at the interface of symmetric cell 4.

For the symmetric cell 4 after the constant current cycle test, the interface between the solid electrolyte and the negative electrode after the short circuit was observed by the SEM. The observation results by the SEM are shown in FIG. 23. FIG. 23 shows that the generation of a reaction layer was suppressed by the insertion of the Sn thin film. This indicates that the interface was protected by the Sn thin film even in operation at room temperature.

## Claims

**1.** A negative electrode composite comprising:
(1) a negative electrode active material containing Li and an element M that is solid soluble in Li as main components; and
(2) a substance X having a higher redox potential than the negative electrode active material or having no electrode activity.

**2.** The negative electrode composite according to claim 1, comprising:
a negative electrode layer including the negative electrode active material; and
a thin layer stacked on the negative electrode layer and containing the substance X as a main component.

**3.** The negative electrode composite according to claim 1 or 2, wherein the negative electrode active material contains a solid solution of the Li and the element M as a main component.

**4.** The negative electrode composite according to any one of claims 1 to 3, wherein the negative electrode active material is a solid solution of the Li and the element M.

**5.** The negative electrode composite according to claim 2, wherein the negative electrode layer is a layer of a solid solution of the Li and the element M.

**6.** The negative electrode composite according to any one of claims 1 to 5, wherein a molar ratio of the Li to the element M is Li:element M = 0.999:0.001 to 0.300:0.700.

**7.** The negative electrode composite according to any one of claims 1 to 6, wherein the element M is at least one element selected from Mg, Al, Zn, Au, Ag, Pt, Na, In, and Bi.

**8.** The negative electrode composite according to any one of claims 1 to 7, wherein the substance X has an ionic conductivity of 10⁻⁸ S▪cm⁻¹ or more.

**9.** The negative electrode composite according to any one of claims 1 to 8, wherein the substance X is a metal or semimetal capable of being alloyed with Li but not solid soluble in Li, and/or an alloy of the metal or semimetal and Li.

**10.** The negative electrode composite according to claim 9, wherein the metal or semimetal is at least one selected from Sn, Ni, Fe, and Si.

**11.** The negative electrode composite according to any one of claims 2 and 5, and claims 3, 4, and 6 to 10 when directly or indirectly depending from claim 2, wherein the thin layer has a thickness in a range of 5 to 500 nm.

**12.** The negative electrode composite according to any one of claims 1 to 11, wherein the element M is Mg.

**13.** The negative electrode composite according to any one of claims 1 to 12, wherein the substance X is Sn and/or an alloy of Sn and Li.

**14.** A negative electrode composite comprising a negative electrode layer including a negative electrode active material containing Li and Mg as main components.

**15.** The negative electrode composite according to claim 14, wherein the negative electrode active material contains a solid solution of the Li and the Mg as a main component.

**16.** The negative electrode composite according to claim 14 or 15, wherein the negative electrode active material is a solid solution of the Li and the Mg.

**17.** The negative electrode composite according to any one of claims 14 to 16, wherein the negative electrode layer is a layer of a solid solution of the Li and the element Mg.

**18.** The negative electrode composite according to any one of claims 14 to 17, wherein a molar ratio of the Li to the Mg is Li:Mg = 0.999:0.001 to 0.700:0.300.

**19.** A negative electrode composite comprising:
a negative electrode layer including a negative electrode active material; and
a thin layer stacked on the negative electrode layer and containing Sn and/or an alloy of Sn and Li as a main component.

**20.** The negative electrode composite according to claim 19, wherein the alloy exhibits a resistance of 10 Ω cm² or less.

**21.** The negative electrode composite according to claim 19 or 20, wherein the thin layer has a thickness in a range of 100 to 500 nm.

**22.** The negative electrode composite according to any one of claims 1 to 21, which is used in a secondary battery.

**23.** The negative electrode composite according to claim 22, wherein the secondary battery is an all-solid-state secondary battery.

**24.** A secondary battery comprising:
the negative electrode composite according to any one of claims 2 and 5, claims 3, 4, and 6 to 13 when directly or indirectly depending from claim 2, and claims 19 to 21;
an electrolyte layer in contact with the thin layer; and
a positive electrode composite including a positive electrode active material.
the negative electrode composite according to any one of claim 1, claims 3, 4, and 6 to 13 when not directly or indirectly depending from claim 2, and claims 14 to 18;
an electrolyte layer; and
a positive electrode composite including a positive electrode active material.

**26.** The secondary battery according to claim 25, further comprising a buffer layer between the negative electrode composite and the electrolyte layer.

**27.** The secondary battery according to any one of claims 24 to 26, wherein the electrolyte layer includes a solid electrolyte layer.

**28.** The secondary battery according to claim 27, wherein the solid electrolyte includes a sulfide-based solid electrolyte.
